(19) **Europäisches Patentamt**

**European Patent Office**

**Office européen des brevets**

(11) Veröffentlichungsnummer: **0 117 278**
**B1**

(12) **EUROPÄISCHE PATENTSCHRIFT**

(45) Veröffentlichungstag der Patentschrift:
12.03.86

(51) Int. Cl.⁴: **C 04 B 7/34**, C 04 B 28/12

(21) Anmeldenummer: **83109547.6**

(22) Anmeldetag: **26.09.83**

(54) **Anorganische Bindemittel zur Herstellung von Gasbetonsteinen.**

(30) Priorität: **29.01.83 DE 3303008**

(43) Veröffentlichungstag der Anmeldung:
**05.09.84 Patentblatt 84/36**

(45) Bekanntmachung des Hinweises auf die Patenterteilung:
**12.03.86 Patentblatt 86/11**

(84) Benannte Vertragsstaaten:
**AT BE CH DE FR GB IT LI LU NL SE**

(56) Entgegenhaltungen:
**DE - A - 2 413 613**
**DE - A - 2 625 067**

**Chemical Abstracts, Band 97, Nr. 6, 9. August 1982, Columbus, Ohio, USA, N.Z. SHINKARUK "Evaluation of the suitability of natural marls", Seite 261, abstract no. 43138w**
**Chemical Abstracts, Band 95, Nr. 4, 27. Juli 1981, Columbus, Ohio, USA, D.P. BOBROVNIK "Mineral composition of the calcination products of siliceous marl", Seite 250, abstract no. 29147a**
**Chemical Abstracts, Band 81, Nr. 8, 26. August 1974, Columbus, Ohio, USA, N.Z. SHINKARUK et al. "Hydrothermal hardening of binders from marls of low-temperature calcining", Seite 228, abstract no. 40870n**

(73) Patentinhaber: **Anneliese Zementwerke AG, D-4722 Ennigerloh i.W. (DE)**

(72) Erfinder: **Tennstedt, Hans-Joachim, Bodelschwingh-Strasse 17, D-4735 Enniger (DE)**

(74) Vertreter: **Eggert, Hans-Gunther, Dr., Räderscheidtstrasse 1, D-5000 Köln 41 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein anorganisches Bindemittel zur Herstellung von Gasbetonsteinen.

Als Bindemittel für die Herstellung von Gasbetonsteinen werden bisher Kalke nach DIN 1060 oder Gemische aus solchen Kalken mit Zementen nach DIN 1164 oder anderen, hydraulisch erhärtenden Bindemitteln und kieselsäurehaltigen Zuschlagstoffen, wie z. B. Sand (gemahlen oder ungemahlen), Flugaschen aus Kraftwerken und/oder anderen $SiO_2$-Trägern eingesetzt.

Als Kalkkomponente für die Gasbetonsteinherstellung ist insbesondere der Einsatz von hart- oder weichgebrannten Weissfeinkalken nach DIN 1060 weit verbreitet. Derartige Weissfeinkalke weisen einen Gehalt an CaO + MgO von 80 Gew.-% oder mehr auf, wobei der MgO-Gehalt kleiner oder gleich 10 Gew.-% ist. Bevorzugt wird ein entsäuerter Kalkstein mit einem CaO-Gehalt über 92 Gew.-% verwendet.

Ebenfalls weit verbreitet ist die Verwendung von Feinkalken, die nach der Entsäuerung von Mergelkalkstein und Kalksteinmergel einen CaO-Gehalt von 75 Gew.-% und mehr aufweisen.

Die Bindemittel werden für die Gasbetonsteinherstellung zunächst zu wässerigen, stark alkalisch reagierenden Suspensionen aufgeschlämmt, denen zur Ausbildung von feinverteilten Poren gasbildende Treibmittel oder auch Schaummittel zugesetzt werden. Bevorzugt wird hierfür u. a. Aluminiumpulver eingesetzt. Anschliessend werden die so erhaltenen Suspensionen in Formen gegossen, wo die Bindemittelmischung zunächst ansteift und dann erhärtet. Die Erhärtung kann dabei unter Dampfdruck durchgeführt werden.

Die Ausbildung des Porengefüges bei der Gasbetonsteinherstellung ist abhängig von der richtigen Abstimmung des Gasbildungsprozesses und dem zeitlichen Verlauf des Ansteifens bzw. Erhärtens der Bindemittelmischung. Dabei ist es ganz besonders wichtig, das Reaktionsverhalten der Ausgangsstoffe so aufeinander abzustimmen, dass ein möglichst optimales Endprodukt hergestellt werden kann. Die entscheidende Rolle bei diesen sehr komplexen Reaktionsvorgängen spielt das verwendete Bindemittel bzw. das Gemisch aus zwei oder mehreren Bindemitteln.

Das Hydratationsverhalten eines Kalkes wird insbesondere durch dessen Nasslöschkurve charakterisiert. Weichgebrannte Weissfeinkalke nach DIN 1060 reagieren sehr schnell mit Wasser und erreichen den charakteristischen Tu-80-Wert, d. h. eine Reaktionstemperatur von 55°C, in ca. 8 min. Die sogenannten Porokalke, d. h. hartgebrannte Weissfeinkalke, reagieren dagegen wesentlich langsamer und erreichen den Tu-80-Wert von ca. 55°C erst nach etwa 15 bis 20 min. Die Maximaltemperaturen liegen bei beiden Kalksorten bei etwa 65°C und erreichen diesen Wert nach ca. 30 bis 50 min.

Die hartgebrannten Weissfeinkalke haben den Vorteil, dass die Gasbetonsteinmischung nach Zugabe von Treibmitteln langsam aufgeht, dadurch leichter steuerbar ist und man durch die Bildung und Stabilisierung der durch die Reaktion von $Ca(OH)_2$ mit $SiO_2$ gebildeten CSH-Phasen relativ günstige Grünstandsfestigkeiten erreicht.

Durch Zugabe von Zementen kann man die Druckfestigkeit darüber hinaus deutlich erhöhen.

Bei den weichgebrannten Weissfeinkalken verlaufen die Reaktionen dagegen wesentlich schneller und sind produktionstechnisch insoweit nicht einfach zu beherrschen. Den weichgebrannten Weissfeinkalken werden deshalb häufig Zemente zugesetzt, die die Hydratationsreaktionen der Bindemittelmischung verlangsamen und damit leichter steuerbar machen.

Ähnlich verhält es sich auch mit Kalken, die man durch Entsäuerung von Mergelkalkstein und Kalksteinmergel erhält. Mit abnehmenden $CaCO_3$-Gehalt in den Rohstoffen Mergelkalkstein bzw. Kalksteinmergel steigt jedoch der $SiO_2$-Gehalt stark an. Bei der Entsäuerung dieser Rohstoffe liegt die Kieselsäure teilweise in sehr feinverteilter hochdisperser und äusserst reaktionsfähiger Form vor. Diese hochdisperse Kieselsäure im Bindemittel reagiert zusammen mit CaO, $Fe_2O_3$ un $Al_2O_3$ schon bei relativ niedrigen Entsäuerungstemperaturen sehr energisch, wobei Klinkerminerale gebildet werden. Diese bei niedrigen Temperaturen gebildeten Klinkermineralien sind äusserst reaktionsfähig, vor allen Dingen in Verbindung mit freier, feindisperser Kieselsäure. Die Folge ist eine schlagartige, wenn auch geringe Temperaturerhöhung in der mit Wasser angemachten Bindemittelsuspension. Derartige Mischungen steifen in Abhängigkeit von der Höhe des $CaCO_3$-Gehaltes des Ausgangsproduktes sehr schnell an und sind kaum noch aufzublähen. Die Folge davon sind zu hohe Raumgewichte, was den Einsatz derartiger Bindemittel zur Gasbetonsteinherstellung verhindert.

Man kann natürlich dem Ansteifen durch erhöhten Wasserzusatz begegnen, dann erhält man jedoch zu geringe Festigkeiten. Ziel der Forschung auf dem Gebiet der Gasbetonsteinherstellung ist es deshalb gewesen, hohe Reaktionsgeschwindigkeiten, zu geringe Stabilität des Rohlings, sofortiges Ansteifen der wässerigen Bindemittelmischung, zu hohe Raumgewichte, zu niedrige Druckfestigkeiten sowie die weiteren, obengenannten, nachteiligen Verfahrensparameter abzustellen. Insbesondere hat man versucht, Verfahren zu entwickeln, die Reaktionsgeschwindigkeit von entsäuertem Mergelkalkstein oder Kalksteinmergel zu verzögern.

Bekannt ist, dass durch Zusatz von Gips oder anderen Sulfatträgern auf das Reaktionsverhalten des Kalkbindemittels Einfluss genommen werden kann. Dabei hat sich aber auch gezeigt, dass zwar die Reaktionsgeschwindigkeit und das Ansteifen verlangsamt werden konnten, dass der erhöhte Sulfatträgerzusatz jedoch zu einem Vergriessungsvorgang des Kalkes führt. Ein ungstörter Hydratationsablauf kann jedoch bei einem solchen Vorgehen nicht mehr gewährleistet werden, so dass es zu Fehlgüssen und zur Beeinträchtigung der stabilisierenden Wirkung und Bildung von CSH-Phasen kommt.

In der DE-B Nr. 2739188 ist ein Verfahren zur Herstellung von Gasbetonsteinen vorgeschlagen worden, bei dem durch erhöhte Sulfatzusätze in Form von Calciumsulfat die oben beschriebenen Nachteile und Schwierigkeiten vermieden werden sollen. Der in DE-B Nr. 2739188 vorgeschlagene Verfahrensablauf ist jedoch diskontinuierlich gestaltet und damit umständlich und zeitaufwendig.

In der DE-B Nr. 2546570 ist ein Feinkalk beschrieben, der einen Gehalt an CaO + MgO von etwa 84 Gew.-% aufweist. Der aus dieser Druckschrift bekannte Feinkalk enthält noch erhebliche Mengen an ungebundener hochdisperser Kieselsäure, so dass auch durch die gemäss der Lehre der DE-B Nr. 2546570 vorgesehenen organischen, verzögernd wirkenden Zusätze die oben geschilderten Nachteile nicht beseitigt werden können.

Der Erfindung liegt die Aufgabe zugrunde, ein anorganisches Bindemittel zur Verfügung zu stellen, das als Bindemittel für die Gasbetonsteinherstellung geeignet ist und die oben beschriebenen Nachteile nicht aufweist, d. h. insbesondere eine gezielte Steuerung des Hydratationsablaufes zur Erzielung eines Endproduktes mit definiertem, geringem Raumgewicht gestattet.

Überraschend wurde dabei gefunden, dass für die Herstellung von Gasbetonsteinen ein anorganisches Bindemittel geeignet ist, das aus bei 1250 bis 1500°C entsäuertem Mergelkalkstein oder Kalksteinmergel und/oder Mischungen daraus mit einem $CaCO_3$-Gehalt von 80 bis 93 Gew.-% besteht und die Klinkerminerale $C_2S$ und $C_3S$ enthält.

Das erfindungsgemässe Bindemittel weist vorzugsweise ein Verhältnis von $C_2S:C_3S$ zwischen 4,0 bei einem Ausgangsmaterial mit einem $CaCO_3$-Gehalt von 85 Gew.-% und 0,6 bei einem Ausgangsmaterial mit einem $CaCO_3$-Gehalt von 90 Gew.-% auf.

Erfindungsgemäss ist ferner vorgesehen, dass das Bindemittel je nachdem, in welchem Temperaturbereich das bzw. die Ausgangsmaterialien entsäuert wurden, einen Gehalt an $C_3S$ aufweist, der bei einem im unteren Temperaturbereich entsäuerten Ausgangsmaterial grösser 0 ist und ein Verhältnis von $C_2S:C_3S$ grösser oder gleich 0,6 bei einem im oberen Temperaturbereich entsäuerten Ausgangsmaterial aufweist.

Weitere Merkmale der Erfindung sind Gegenstand der Unteransprüche.

Aus der DE-B Nr. 2431613 sind Gasbetonsteinmischungen, bestehend aus Kalk, Sand und einem Blähmittel bekannt, wobei der Kalk ganz oder teilweise durch einen entsäuerten Mergel ersetzt ist. Dieser Mergel soll gemäss der Auslegeschrift zwischen 900 und 1300, insbesondere 1200°C entsäuert werden. Allerdings sieht die DE-B Nr. 2431613 ausdrücklich vor, dass die Entsäuerung derart schonend durchgeführt werden soll, dass sich keine Klinkerminerale bilden.

Demgegenüber sieht die erfindungsgemässe Lehre ein Bindemittel vor, das aus einem bewusst bis zur Klinkermineralbildung entsäuerten Rohstoff bzw. Rohstoffgemisch besteht. Durch die Verwendung eines bei hohen Temperaturen entsäuerten Mergelkalksteins oder Kalksteinmergels oder Mischungen daraus mit den angegebenen Gehalten an $C_2S$ (2 CaO · $SiO_2$) und $C_3S$ (3 CaO · $SiO_2$) als Bindemittel zur Gasbetonsteinherstellung kann ein Bindemittel zur Verfügung gestellt werden, das eine definierte Steuerung des Hydratationsablaufes der mit einem Bläh- oder Treibmittel versetzten wässerigen Suspension ermöglicht, wobei Gasbetonsteine mit hohen Endfestigkeiten erhalten werden können.

Die Erfindung wird nachfolgend anhand von Beispielen näher erläutert.

*Bindemittel gemäss dem Stand der Technik*

Es wurde ein Mergelkalkstein mit folgender struktureller Zusammensetzung verwendet:

0,22 Gew.-% Hydratwasser
88,92 Gew.-% $CaCO_3$
1,68 Gew.-% $MgCO_3$
9,18 Gew.-% Restbestandteile von $SiO_2$, $Al_2O_3$, $Fe_2O_3$, $K_2O$, $SO_3$
100,00 Gew.-%

Man muss davon ausgehen, dass die Restbestandteile als Tonsubstanz im $CaCO_3$ und $MgCO_3$ enthalten sind.

Die chemische Analyse dieses Mergelkalksteins hat folgendes Aussehen:

40,22 Gew.-% $CO_2$ + $H_2O$
5,64 Gew.-% $SiO_2$
1,67 Gew.-% $Al_2O_3$
0,66 Gew.-% $Fe_2O_3$
49,80 Gew.-% CaO
0,80 Gew.-% MgO
0,51 Gew.-% $K_2O$
0,27 Gew.-% $SO_3$
0,43 Gew.-% Restkomponenten
100,00 Gew.-%

Der Mergelkalkstein wurde zunächst getrocknet, anschliessend feingemahlen und dann bei 950°C entsäuert.

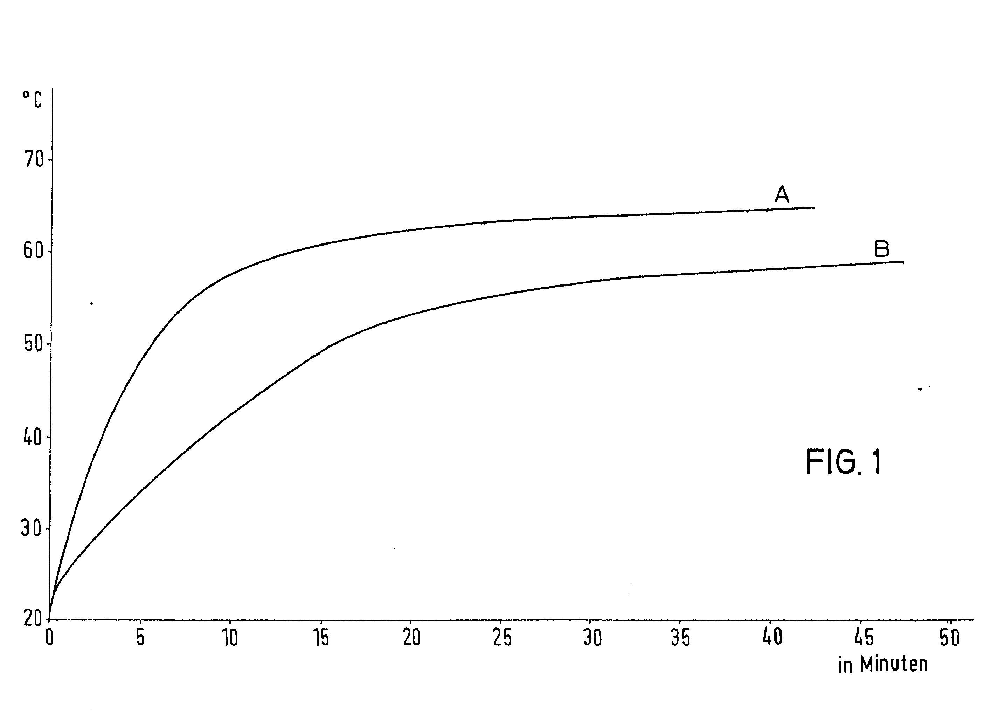

Die Nasslöschkurve dieses lediglich bei 950°C entsäuerten Mergelkalksteins ist als Kurve A in Fig. 1 als Funktion der Temperatur gegenüber der Zeit (in Minuten) dargestellt. Aus dem Kurvenverlauf ist zu ersehen, dass die Reaktion beim Ablöschvorgang, vor allem in der Anfangsphase, sehr stürmisch verläuft. Es handelt sich hierbei also um ein typisches Bindemittel, das für die Herstellung von Gasbetonsteinmischungen bzw. Gasbetonsteinen nur schlecht geeignet ist, weil eine gesteuerte Gasentwicklung in dem schnell abbindenden Bindemittelgemisch kaum möglich ist.

*Erfindungsgemässes Bindemittel*

Das gemäss dem vorstehenden Beispiel entsäuerte Material wurde anschliessend bei 1350°C 20 min lang in oxydierender Atmosphäre gebrannt. Das so erhaltene Material wies folgende Analyse auf:

9,43 Gew.-% $SiO_2$
2,79 Gew.-% $Al_2O_3$
1,11 Gew.-% $Fe_2O_3$
83,31 Gew.-% $CaO$
1,34 Gew.-% $MgO$
0,86 Gew.-% $K_2O$
0,45 Gew.-% $SO_3$
0,71 Gew.-% Restkomponenten
100,00 Gew.-%

Nach Bogue ergibt sich folgende rechnerische Mineralzusammensetzung:

3,38 Gew.-% $C_4AF$
5,51 Gew.-% $C_3A$
22,28 Gew.-% $C_2S$
6,31 Gew.-% $C_3S$
59,16 Gew.-% $CaO$ frei
0,00 Gew.-% $SiO_2$ ungebunden
3,36 Gew.-% Rest

100,00 Gew.-%

Die Nasslöschkurve dieses bei 1350°C entsäuerten Mergelkalksteins ist als Kurve B in Fig. 1 dargestellt.

Sie zeigt eine bei Versuchsbeginn langsame und dann stetig steigende Temperaturerhöhung und kommt somit dem Idealverhalten eines Bindemittels für die Herstellung von Gasbetonsteinen nahe.

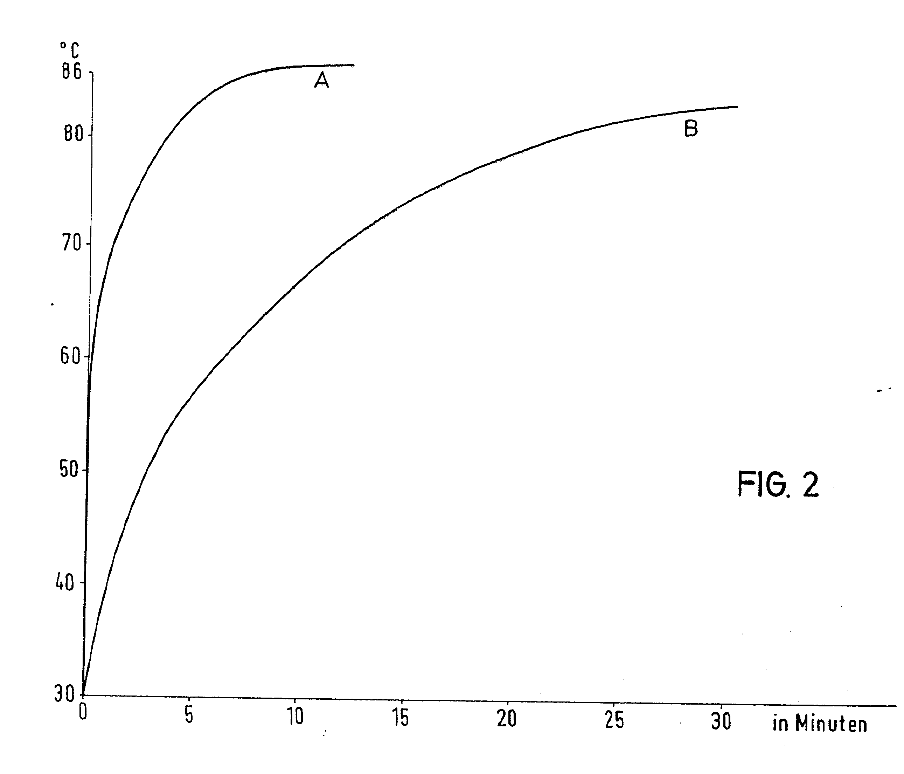

Die Vorteile des erfindungsgemässen Bindemittels werden noch deutlicher, wenn man aus den vorstehend genannten Bindemitteln gemäss dem Stand der Technik bzw. der Erfindung Gasbetonstandardmischungen herstellt und dabei den Temperatur- und den Zeitverlauf registriert. In Fig. 2 ist als Kurve A das Verhalten einer Gasbetonstandardmischung nach dem Stand der Technik und als Kurve B das Verhalten einer Gasbetonstandardmischung mit einem erfindungsgemässen Bindemittel dargestellt.

Die Kurve A lässt einen sehr stürmischen Reaktionsverlauf erkennen und gleichzeitig steigt die Gasbetonstandardmischung aufgrund der katalytischen Wirkung der im Bindemittel enthaltenen ungebundenen, hochdispersen Kieselsäure sehr schnell an. Die Mischung wird plastisch und kann nicht mehr richtig aufgebläht bzw. muss durch erhöhte Wasserzugabe dünnflüssig gehalten werden. Die erhöhte Wasserzugabe bedeutet natürlich einen deutlichen Festigkeitsverlust.

Die mit einem erfindungsgemässen Bindemittel hergestellte Gasbetonstandardmischung verhält sich dagegen nahezu ideal. Die Mischung bleibt niedrig viskos und ist somit auch leicht aufzublähen. Der Ansteifungsvorgang setzt langsam ein und verläuft parallel zu der Grünstandsfestigkeit und dem Erhärtungsfortschritt des sich bildenden Gasbetonsteinkuchens. Wenn die erforderliche Maximaltemperatur von ca. 80°C erreicht ist, ist die Härtung so weit fortgeschritten, dass der Kuchen volumenkonstant bleibt. Dadurch werden die jeweils gewünschten Raumgewichte erreicht und auch eingehalten.

## Patentansprüche

1. Anorganisches Bindemittel zur Herstellung von Gasbetonsteinen, gekennzeichnet durch bei 1250 bis 1500°C entsäuerten Kalksteinmergel oder Mergelkalkstein und/oder Mischungen daraus, mit einem $CaCO_3$-Gehalt von 80 bis 93 Gew.-% und einem Gehalt an den Klinkermineralen $C_2S$ (2 $CaO \cdot SiO_2$) und $C_3S$ (3 $CaO \cdot SiO_2$).

2. Bindemittel nach Anspruch 1, gekennzeichnet durch ein Verhältnis von $C_2S:C_3S$ zwischen 4,0 bei einem Ausgangsmaterial mit einem $CaCO_3$-Gehalt von 85 Gew.-% und 0,6 bei einem Ausgangsmaterial mit einem $CaCO_3$-Gehalt von 90 Gew.-%.

3. Bindemittel nach einem der Ansprüche 1 oder 2, gekennzeichnet durch bei 1250 bis 1500°C entsäuerten Mergelkalkstein oder Kalksteinmergel und/oder Mischungen daraus, mit einem $CaCO_3$-Gehalt von 85 bis 90 Gew.-%.

4. Bindemittel nach einem der Ansprüche 1 bis 3, gekennzeichnet durch einen 10 bis 40, vorzugsweise 15 bis 30 min gebrannten Mergelkalkstein oder Kalksteinmergel und/oder Mischungen daraus.

5. Bindemittel nach einem der Ansprüche 1 bis 4, dadurch gekennzeichnet, dass es frei von ungebundener Kieselsäure ($SiO_2$) ist.

6. Bindemittel nach einem der Ansprüche 1 bis 5, gekennzeichnet durch einen Gehalt an freiem $CaO$ grösser oder gleich 40 Gew.-%.

7. Bindemittel nach einem der Ansprüche 1 bis 6, gekennzeichnet durch einen Gehalt an $C_3S$ (3 $CaO \cdot SiO_2$) grösser 0 bei einem im unteren Temperaturbereich entsäuerten Ausgangsmaterial und einem Verhältnis von $C_2S:C_3S$ grösser oder gleich 0,6 bei einem im oberen Temperaturbereich entsäuerten Ausgangsmaterial.

8. Bindemittel nach einem der Ansprüche 1 bis 7, gekennzeichnet durch einen Zusatz eines Sulfatträgers in einer Menge von 1 Gew.-% $SO_3$ je 2,0 bis 3 Gew.-% $SiO_2$.

9. Bindemittel nach Anspruch 8, dadurch gekennzeichnet, dass der Sulfatträger Kalziumsulfat, insbesondere Anhydrit und/oder Gips ist.

10. Bindemittel nach einem der Ansprüche 1 bis 9, gekennzeichnet durch einen Zusatz eines Zementes oder eines anderen, vorwiegend hydraulisch erhärtenden Bindemittels.

11. Bindemittel nach einem der Ansprüche 1 bis 10, gekennzeichnet durch eine spezifische Oberfläche zwischen 5000 und 13000 Blaine.

## Claims

1. Inorganic binder for the production of porous concrete blocks, characterized by limestone marl or marly limestone and/or mixtures thereof which has been deacidified at 1,250 to 1,500°C, with a $CaCO_3$ content of 80 to 93%-wt. and a content of the clinker minerals $C_2S$ (2 $CaO \cdot SiO_2$) and $C_3S$ (3 $CaO \cdot SiO_2$).

2. Binder according to Claim 1, characterized by a ratio of $C_2S:C_3S$ between 4.0 in the case of a starting material with a CaCO₃ content of 85%-wt., and 0.6 in the case of a starting material with a CaCO₃ content of 90%-wt.

3. Binder according to Claim 1 or 2, characterized by marly limestone or limestone marl and/or mixtures thereof which has been deacidified at 1,250 to 1,500°C, with a CaCO₃ content of 85 to 90%-wt.

4. Binder according to one of Claims 1 to 3, characterized by a marly limestone or limestone marl and/or mixtures thereof which has been burnt for 10 to 40, preferably 15 to 30 min.

5. Binder according to one of Claims 1 to 4, characterized in that it is free from uncombined silicic acid ($SiO_2$).

6. Binder according to one fo Claims 1 to 5, characterized by a content of free CaO which is greater than or equal to 40%-wt.

7. Binder according to one of Claims 1 to 6, characterized by a content of $C_3S$ ($3\,CaO \cdot SiO_2$) which is greater than zero in the case of starting material which has been deacidified in the lower temperature range, and a ratio of $C_2S:C_3S$ greater than or equal to 0.6 in the case of a starting material which has been deacidified in the upper temperature range.

8. Binder according to one of Claims 1 to 7, characterized by an addition of a sulphate carrier in a quantita of 1%-wt. $SO_3$ for each 2.0 to 3%-wt. $SiO_2$.

9. Binder according to Claim 8, characterized in that the sulphate carrier is calcium sulphate, in particular anhydrite and/or gypsum.

10. Binder according to one of Claims 1 to 9, characterized by an addition of a cement or of another predominantly hydraulically hardening binder.

11. Binder according to one of Claims 1 to 10, characterized by a specific surface of between 5,000 and 13,000 Blaine.

## Revendications

1. Liant inorganique pour la fabrication de blocs de béton poreux, caractérisé par une marne calcaire ou un calcaire marneux désacidifié à 250-1500°C et/ou leurs mélanges, d'une teneur en CaO₃ de 80 à 93% en poids et contenant les minéraux de clinker $C_2S$ ($2\,CaO \cdot SiO_2$) et $C_3S$ ($3\,CaO \cdot SiO_2$).

2. Liant selon la revendication 1, caractérisé par un rapport $C_2S/C_3S$ compris entre 4,0 pour une matière première à 85% en poids de CaCO₃ et 0,6 pour une matière première à 90% en poids de CaCO₃.

3. Liant selon l'une des revendications 1 ou 2, caractérisé par un calcaire marneux ou une marne calcaire désacidifié(e) à 250-1500°C et/ou leurs mélanges d'une teneur en CaCO₃ de 85-90% en poids.

4. Liant selon l'une des revendications 1 à 3, caractérisé par un calcaire marneux ou une marne calcaire calciné(e) pendant 10 à 40 min, de préférence 15 à 30 min, et/ou leurs mélanges.

5. Liant selon l'une des revendications 1 à 4, caractérisé en ce qu'il est exempt d'acide silicique ($SiO_2$) non lié.

6. Liant selon l'une des revendications 1 à 5, caractérisé par une teneur en CaO libre supérieure ou égale à 40% en poids.

7. Liant selon l'une des revendications 1 à 6, caractérisé par une teneur en $C_3S$ ($3\,CaO \cdot SiO_2$) supérieure à 0 pour une matière première désacidifiée dans le domaine inférieur de températures et un rapport $C_2S/C_3S$ supérieur ou égal à 0,6 pour une matière première désacidifiée dans le domaine supérieur de températures.

8. Liant selon l'une des revendications 1 à 7, caractérisé par une addition d'un support de sulfate en quantité de 1% en poids de $SO_3$ pour chaque 2,0 à 3% en poids de $SiO_2$.

9. Liant selon la revendication 8, caractérisé en ce que le support de sulfate est du sulfate de calcium, en particulier l'anhydrite et/ou le gypse.

10. Liant selon l'une des revendications 1 à 9, caractérisé par une addition d'un ciment ou d'un autre liant à durcissement essentiellement hydraulique.

11. Liant selon l'une des revendications 1 à 10, caractérisé par une surface spécifique Blaine comprise entre 5000 et 13000.

FIG. 1

0 117 278

FIG. 2

°C

in Minuten

0 117 278